# EUROPEAN PATENT SPECIFICATION

(11) **EP 2 955 013 B1**
(45) Date of publication and mention of the grant of the patent: **01.01.2020**
(21) Application number: 15163824.4
(22) Date of filing: 16.04.2015
(51) Int. Cl.: B32B 5/02, B32B 5/08, B32B 5/12, B32B 5/24, B32B 27/12, B32B 27/22, B32B 27/30, A47G 27/00, D02G 3/18, D02G 3/36, D02G 3/44, D03D 15/00, D03D 15/02, E04F 15/02, D06N 3/06, B29B 15/12, B32B 17/04, C03C 25/26, B32B 5/06, B32B 5/26, B32B 27/18

(54) **Dimensional stable flooring materials and its intermediates**
Formfeste Bodenbeläge
Révetement de sol avec de la forme stabile

(30) Priority: 16.04.2014 BE 201400267; 16.04.2014 BE 201400268; 16.04.2014 BE 201400266
(43) Date of publication of application: 16.12.2015
(73) Proprietor: UNDRC bvba, 8550 Zwevegem (BE)
(72) Inventor: Vantomme, Pascal, 8530 Harelbeke (BE); Vroman, Johan, 9160 Lokeren (BE)
(74) Representative: Brantsandpatents bvba

(56) References cited:
- EP-A2- 2 039 718
- EP-A2- 2 614 956
- CN-A- 102 261 003
- US-A- 3 623 937
- US-A- 3 765 972
- US-A- 4 010 302
- US-A1- 2004 198 120
- US-A1- 2004 253 410
- US-A1- 2005 255 775
- US-A1- 2011 014 467

## Description

### TECHNI CAL FIELD

The present invention relates to a dimensional stable flooring material with a flat woven cloth as top layer. Further, the present invention relates to a method for producing a composite yarn made from polyvinyl chloride (PVC) and glass fiber, and to a composite yarn with high wear resistance. The composite yarn according to the invention has properties which allow to process the yarn, inter alia, to floor and wall coverings. The present invention also relates to a combination of adhesive for gluing flooring materials with a subsurface and low migration plasticizer in the polyvinyl chloride sublayer of flooring materials. As a result, minimal migration of the plasticizer occurs, as a result of which the dimensional stability of the flooring material hardly changes, and only a minimal contraction occurs in aging.

### PRIOR ART

The coating of spun glass fibers with a polymer resin is a well-known technique. Herein, a layer of polymer is applied around the glass fibers and a reinforced composite yarn occurs having the appearance of polymer, but with improved mechanical properties. Some applications, however, make great demands on the wear resistance and quality of these composite yarns. For example, the use of these composite yarns in flat woven cloth for flooring sets high demands on wear resistance and the dimensional stability of the yarns must be high.

The method in EP 0 393 536 A2 to produce these composite yarns consists of passing the spun fiber through a bath of molten resin which is fed by an extruder. Subsequently, the spun fibers which are provided with a layer of still liquid resin is conducted through a die head so as to determine the final shape of the composite yarn. The composite yarn is conducted through a cooling bath, which ensures that the resin cures. It is a known problem that the wear resistance of these composite yarns is not high and that it limits the use of these yarns. The cause of the low wear resistance has its origin during the production process, because of a low adhesion between the surface of the fibers and the molten resin. This leads to air bubbles and interruptions in the coating and, ultimately, leads to a weak connection between glass fiber and resin.

In order to increase the adhesion between the fibers and the resin and thus to obtain a higher wear resistance, various improvement patents have been submitted. To date, there is still no technology available which produces a yarn with a good wear resistance and a high dimensional stability. For example, there are technologies in which a post-treatment takes place with the glass fibers still coated in liquid resin. Herein, either the pressure is increased or the fiber is led through a vacuum at an elevated temperature. These two methods remove the air bubbles in the coating but lead to an uneven surface, as a result, the adhesion of the coating is better but the uneven surface is more susceptible to wear. Moreover, these technologies consume a lot of energy and these considerably slow down the production process.

Another technology (US 5 236 646) increases the temperature of the liquid resin so that the viscosity decreases which results in a higher affinity between the fiber and resin. The major drawback herein is that the resin partly starts to dissolve, thereby changing the properties of the resin. Also, the addition of plasticizers (US 4 783 349, US 4 735 828 and US 4 624 886) to increase the viscosity of the liquid resin and the wetting of the glass fibers with a plasticizer is applied. The disadvantage herein is that the plasticizer ultimately ends up in the obtained composite yarn, and this brings about a change in mechanical properties. In US 5 213 889, the coating with polymers having low molecular weights is more successful because these have a higher viscosity at a same temperature of processing than a polymer having a high molecular weight. Herein, again, a yarn is produced with a higher adhesion of coating to the fibers, but the coating itself with a polymer having a lower molecular weight is more sensitive to wear and is less durable. In EP 1 007 309 B1, the glass fiber is heated to a temperature above the temperature of the molten resin prior to coating, this increases the affinity between the resin and the glass fiber, and results in a better wear resistance. However, this technology does not provide a solution in order to obtain a dimensional stable yarn.

The use of flat woven cloth in flooring requires a high dimensional stability because the yarns in the cloth cannot camouflage the seams between flooring elements because of their orientation. Upon aging, the flooring elements may not contract so that the existing seams do not become visibly larger.

The use of a composite yarn of spun glass fiber and a polymer coating, in a flooring is only possible if the wear resistance is high enough.

WO 2005/113229 A2 provides a flat woven cloth of composite fibers composed of polyvinyl chloride (PVC) and glass fibers as a top layer. The sublayer is made of polyvinyl chloride (PVC). With aging and under varying temperature and humidity conditions, the flooring will contract and the seams between the flooring units will become visibly larger. In WO 2005/113229 A2, there is no solution provided which avoids the problem of contraction and dimensional stability.

Furthermore, the application of a top layer comprising a flat woven cloth onto a sublayer is not always self-evident. The dimensional stability must be maintained. There is a demand for a method with which a top layer comprising a flat woven cloth can be applied to a variety of sublayers.

It is a known problem that the plasticizer from a PVC sublayer of flooring materials migrates to the glue used to glue the flooring material to the subsurface. The consequence of this migration of plasticizer is that the mechanical properties of the sublayer change upon aging, and that the sublayer, and consequently also the flooring material itself, contracts. This contraction ensures that the existing seams between different units of flooring material become visibly larger. The latter is especially a problem when flat woven cloth is applied as flooring. The yarns of a flat woven cloth are oriented parallel with respect to the sublayer, and have a minimum of movement. By this, the yarns of the flat woven cloth cannot overlap and camouflage the seams so that the seams become visibly larger upon aging.

CA 2 349 052 provides a solution to the migration of plasticizer from the sublayer, an extra layer is hereby provided which stops the migration of the plasticizer. This layer is based on an acrylate, methacrylate, or a copolymer of this with polystyrene or polyacrylonitrile. The presence of an extra layer makes the production of the flooring material more cumbersome and more expensive. An extra layer from a different material has a different thermal expansion coefficient which can lead to an effect comparable with a bimetallic effect. Due to the difference in expansion coefficients, the flooring material will in a certain extent become warped during a change of temperature.

Traditionally, phthalates are used as plasticizer of polyvinyl chloride (PVC) in flooring. However, the aim is to use alternatives because phthalates have potential endocrine disrupting properties as a result of which phthalates are now considered as harmful.

The demand remains for a flooring material without harmful components with a minimum contraction as a result of loss of plasticizer without thereby compromising the dimensional stability at temperature differences.

The present invention aims to find a solution for at least some of the afore-mentioned problems with the objective of obtaining flooring products with a high dimensional stability.

### SUMMARY OF THE INVENTION

The invention provides, inter alia, the following aspects:
- A semi-finished product suitable for processing into floor and wall covering comprising a carrier (3) comprising non-woven glass fiber (4) embedded in polyvinyl chloride (PVC) and a top layer (1) comprising a flat woven cloth (2) made of composite yarns wherein carrier (3) and flat woven cloth (2) are fused together and form one whole, as defined in claim 1.
- Said semi-finished product suitable for processing into floor and wall covering, wherein the material of the carrier (3) penetrates until into the flat woven cloth (2) and the non-woven glass fibers (4) which are situated partly between the yarns of the flat woven cloth (2).
- Method for producing one of the above-mentioned half-finished products, comprising the following steps:
   ∘ weaving a flat cloth (2) preferably from composite yarn, and preferably with yarns fused together;
   ∘ mixing glass fibers and plastisol and spreading it out in a layer;
   ∘ applying the flat woven cloth (2) onto the plastisol glass fiber layer;
   ∘ heating the flat woven cloth (2) and the glass fiber plastisol layer to a temperature above 150°C, as a result of which the plastisol glass fiber layer and the flat woven cloth fuse together and form one whole;
   ∘ cooling the flat woven cloth (2) and the plastisol glass fiber layer to a temperature below 60°C, preferably below 50°C, more preferably below 40°C, even more preferably below 30°C, most preferably below 20ºC.
- A flooring material comprising one of the above-mentioned half-finished products and either:
   ∘ a polyvinyl chloride (PVC) tile (5) as a sublayer having a thickness of at least 2 mm; or,
   ∘ a polyvinyl chloride (PVC) flooring strip (6) as a subhaving a thickness of minimum 1 mm; and/or,
   ∘ a click system (7) in the sublayer.
- A method for producing said flooring material or a wall covering material comprising the following steps:
   ∘ applying a layer of plastisol or glue onto the sublayer;
   ∘ applying the semi-finished product onto the layer of plastisol or glue;
   ∘ heating the sublayer, plastisol or glue and semi-finished product to a temperature above 150°C.
   ∘ cooling the sublayer, plastisol or glue and semi-finished product to a temperature below 60°C, preferably below 50°C, more preferably below 40°C, even more preferably below 30°C, most preferably below 20°C.
- A method for producing a composite yarn, comprising a spun glass fiber, preferably thicker than 5 microns, preferably thinner than 1000 microns and a coating of polyvinyl chloride (PVC) preferably thicker than 100 microns and preferably thinner than 2000 microns, comprising the following steps:
   ∘ heating the spun glass fiber to a first temperature;
   ∘ passing the still hot glass fiber through a molten polyvinyl chloride (PVC) resin at a second temperature;
   ∘ let the molten resin solidify around the spun glass fiber in a cooling bath;
   wherein the first temperature is higher than the second temperature and the temperature of the cooling bath is lower than 30°C;
- A composite yarn produced according to the above-mentioned method, comprising a spun glass fiber thicker than 5 microns, thinner than 1000 microns and a coating of polyvinyl chloride (PVC) thicker than 100 micron and thinner than 2000 microns.
- A combination, suitable for gluing flooring materials with a subsurface, of:
   ∘ a low migration plasticizer in a polyvinyl chloride (PVC) sublayer of the flooring material selected from the list of di-isodecyl phthalate (DIDP), di-isononyl phthalate (DINP), dioctyl terephthalate (DOTP), di-isononyl-1,2-cyclohexanedicarboxylate (DINCH), or an ester of an alkyl sulphonic acid and phenol; and
   ∘ an adhesive which is a water-based poly-acrylate glue filled with a synthetic resin.

### DESCRIPTION OF THE FIGURES

The invention will now be elucidated with reference to the attached drawings of a random embodiment example, to which the invention is not limited.
Figure 1 represents a set-up for the production of a composite yarn according to an embodiment of the invention.
Figure 2 shows a semi-finished product suitable for processing into floor or wall coverings.
Figure 3 shows a floor tile comprising the semi-finished product.
Figure 4 shows a flooring strip comprising the semi-finished product.
Figure 5 shows a click system provided with a flooring and a base layer.
Figure 6 represents a cross-section of a semi-finished product according to an embodiment of the invention.

### DETAILED DESCRIPTION

Contraction which occurs in floor and wall coverings can be traced back to three different causes. A first cause is the potential contraction, it has its origins in internal stresses which are built up when fibrous materials are processed, such as spinning and weaving. These internal stresses remain present in the finished material and discharges of these stresses can be triggered by a sudden temperature difference. The consequence of these discharges is a change of dimensions or contraction of the material. This contraction is called potential contraction and is defined by EN 434:1995. A second cause of contraction is a result of differences in temperature and humidity, and is determined according to EN 986:2006. A floor or wall covering is built up from different layers, each with a different composition, as a result, each layer also possesses a different thermal expansion coefficient. These layers are connected to one another and in this way, an effect occurs that is comparable to a bimetallic effect, expansion will therefore ensure that the floor or wall covering in a certain degree will warp, as a result of which the contraction appears to be larger than is actually the case. A final cause of contraction in floor or wall covering in which polymer is processed, is caused by the loss of plasticizer with aging. This contraction is defined by EN 1903:2008. The plasticizer which is added in order to obtain the desired properties of the polymer, diffuses from the polymer layer to the surrounding materials, as a result of which the polymer layer itself contracts. In what follows, the term contraction refers to a combination of the contraction due to these three causes. Contraction is the main cause of the reduction of dimensional stability.

The term "flat woven cloth" refers to a fabric or knit wherein the yarns mainly extend according to two dimensions. Thus, a flat structure is formed wherein no fibers protrude at right angles to these two dimensions.

The term "top layer" 1 refers to an upper layer in a flooring material. This layer comprises the finishing layer, the layer which is provided with the fabric.

The term "sublayer" refers to a layer in a flooring material, this layer ensures, inter alia, the adhesion of the flooring material to the subsurface, the strength and stability of the flooring material.

The term "semi-finished product" refers to a material that is to be processed further before it can be used as floor covering.

The term "floor tile" 5 refers to a flooring material wherein a number of equal elements (floor tiles) can be combined to cover a floor. These elements are at least provided with a top layer 1, which comprises a fabric and a sublayer.

The term "click system" 7 refers to a flooring material wherein the sublayer is provided with a system with which various floor covering parts can be attached to one another without the use of any other connection elements. Here, the sublayer has a minimum thickness of 6 mm.

The term "flooring strip" 6 refers to a flooring material wherein a fabric in a top layer 1 is arranged onto a sublayer. The dimensions of these flooring strips are such that there are no or very few seams when this type of flooring is applied.

The term "subsurface" refers to the material onto which the floor is arranged, this may be, inter alia, concrete, wood, a mixture of sand and cement (screed) or a subfloor, but also an already existing floor.

The term "non-woven" is a term of the art and refers to a textile material which is not woven or knitted. Synonyms are "fleece". In contrast to a classical textile cloth, no yarns are used, but fibers and filaments are laid directly into a fleece and then connected to one another.

In a first aspect, the invention provides a method for producing a composite yarn, comprising a spun glass fiber preferably thicker than 5 microns, preferably thinner than 1000 microns and a coating of polyvinyl chloride (PVC) preferably thicker than 100 microns and preferably thinner than 2000 microns. The method comprises the following steps:
- heating the spun glass fiber to a first temperature;
- passing the still hot glass fiber through a molten polyvinyl chloride (PVC) resin at a second temperature;
- let the molten resin solidify around the spun glass fiber in a cooling bath.
Wherein the first temperature is higher than the second temperature and the temperature of the cooling bath is lower than 30°C.

The heating of the spun glass fiber to a first temperature which is higher than the temperature of the molten polyvinyl chloride (PVC) has the advantage that impurities and gases which adhere to the glass fibers are removed. As a result of which no gas bubbles remain stuck to the glass fibers when the glass fibers are passed through the molten polyvinyl chloride (PVC). If a gas bubble sticks to the glass fibers, this gas bubble is embedded in the final polyvinyl chloride (PVC) coating and a place occurs where polyvinyl chloride (PVC) and the glass fibers do not touch one another. This provides a less good adhesion between coating and glass fiber, and eventually reduces the wear resistance of the composite yarn. When spun glass fibers are used, the problem of gases which adhere to the glass fiber is even bigger, since these gases are more difficult to remove. Because the glass fibers are twisted around one another, these form a more cohesive structure which form a sort of cage which hold the gases better. As a result, the temperature treatment during the production of composite yarns with spun glass fibers is of even more importance than with non-spun glass fibers. As well as the size of the temperature difference between the first and the second temperature.

The presence of gas bubbles between the coating and the glass fibers also has consequences for the contraction of the composite yarn. Due to the imperfections between coating and glass fiber, more possibilities of movement arise between the coating and glass fiber, as a result of which influences such as temperature changes and loss of plasticizer may result in a greater contraction of the composite yarn.

The thicker a spun glass fiber is, the more gases may be situated between the glass fibers and the more difficult these are able to escape from between the glass fibers. Therefore, the method imposes a maximum thickness of the spun glass fiber of 1000 microns. Spun glass fibers thinner than 5 microns do not have the necessary mechanical properties to be used in said method. These spun glass fibers will, due to the exerted forces during the process, break, as a result of which the process each time will have to be restarted.

The still hot coated fiber is directly cooled in a cooling bath, which ensures that the composite yarn cools in a controlled manner. Because of the cooling bath, yarns are obtained having uniform properties and external conditions such as ambient temperature do not affect the properties of the composite yarns. By the cooling bath, the resin is rapidly brought below its glass transition temperature, which ensures that less stresses can be built up in the material and thus a reduced potential contraction is present in the composite yarn. Below the glass transition temperature, the polymer molecules can no longer move with respect to one another and thus also not adopt an orderly mutual orientation which provides extra stresses.

By a temperature of the cooling bath which is lower than 30°C, the polyvinyl chloride (PVC) coating is rapidly cooled below its glass transition temperature and the composite yarn obtains specific properties in wear resistance such as, preferably, a mass loss of less than 70 g/m², more preferably less than 50 g/m², and most preferably less than 30 g/m² measured according to a Lisson test EN 1963:2007, when the yarn is used as a top layer in a flooring material. However, when the coating of polyvinyl chloride (PVC) becomes thicker than 2000 microns, this rapid cooling is no longer possible. It takes longer for the polyvinyl chloride (PVC), which is situated close to the glass fiber, is cooled below the glass transition temperature so that this polyvinyl chloride (PVC) can cool down more slowly and in this way, does get the chance to be oriented with respect to one another. As a result, the mechanical properties of the composite yarn change. A coating of polyvinyl chloride (PVC) thinner than 100 micron in turn leads to openings in said coating, partly due to imperfections in the spun glass fiber.

In a preferred embodiment, the composite yarn is in the cooling bath for less than 2 seconds, preferably for less than 1 second. An additional advantage of the presence of the cooling bath is that the composite yarn can be rolled up sooner after leaving the extrusion nozzle, without distortions and fusions of the composite yarn occurring.

In a preferred embodiment, a set-up is used comprising an oven, an extruder which feeds liquid polyvinyl chloride to a nozzle through which the spun glass fiber passes and a cooling bath filled with preferably water as a coolant.

In a preferred embodiment, a first step consists of heating the spun glass fiber to a temperature of between 200º C and 300º C, preferably 250°C in an oven which is situated just before the fiber inlet of the nozzle. As a result, the molten polyvinyl chloride resin retains its high temperature and retains its low viscosity. A thermal shock is avoided and the molten polyvinyl chloride resin penetrates better in the glass fiber bundle. In this way, the adhesion between the glass fibers and the molten polyvinyl chloride resin increases. The high temperature removes volatile components and gases which are present at and between the various glass fibers. This leads to a better coating, with fewer air bubbles or disruptions in the polyvinyl chloride jacket. This ensures a higher wear resistance and adhesion between coating and fiber than the classic composite yarns. The heating also prevents a thermo-shock effect, which results in stresses in the finished product. When a cold glass fiber is brought into contact with a molten resin of 175ºC, the glass fiber first needs time to adapt to this temperature, if not a poor adhesion of the resin to the glass fiber will occur and internal stresses will be present in the yarn.

Subsequently, the heated glass fiber is pulled through the extrusion nozzle whereby the glass fiber comes into contact with molten polyvinyl chloride (PVC) resin at a temperature of between 125º C and 190º C, preferably 175º C In a preferred embodiment, a reservoir for liquid resin with a length of 4 mm is provided in the nozzle. The speed at which the spun fiber moves through the reservoir of molten resin is chosen in such way that the spun glass fibers is in contact with the molten resin for preferably less than 10 milliseconds (ms), more preferably less than 5 ms, and most preferably shorter less than 1 ms.

In a preferred embodiment, the spun glass fiber moves through the molten polyvinyl chloride (PVC) resin at a speed of between 100 m/min and 900 m/min, preferably around 500 m/min.

In a preferred embodiment, the reservoir in the nozzle is fed by two extruders. By this, the coating can be built up from two different types of resin, for example, two different colors of polyvinyl chloride resins or resins having different mechanical properties.

In a preferred embodiment, the cooling bath is composed of different segments, through which continuously fresh coolant flows. As a result, the temperature of the coolant can be controlled more easily, and there is more control over the cooling of the composite yarn.

In a preferred embodiment, the thickness of the finished composite yarn is measured after it has left the cooling bath, deviations in thickness are compensated by letting the spun glass fiber go through the liquid resin more quickly or more slowly.

In a second aspect, the invention provides a composite yarn produced according to a method described above. The composite yarn comprises a spun glass fiber thicker than 5 microns, thinner than 1000 microns and a coating of polyvinyl chloride (PVC) thicker than 100 micron and thinner than 2000 microns.

In a preferred embodiment, the composite yarn has at least one of the following properties:
- a wear resistance corresponding to a mass loss of less than 30 g/m² measured according to a Lisson test EN 1963:2007 when the yarn is used as a top layer in a flooring material;
- the polyvinyl chloride coating has a shear force of more than 20 N according to a test:
   ∘ a composite yarn is deprived on one side of the polyvinyl chloride coating, so that still 15 cm of polyvinyl coating remains around the core of spun glass fiber,
   ∘ the still coated end of the composite yarn is glued at one end between two non-woven polyester (PES) strips of 2 cm wide and over a length of 2 cm with a polyacrylate glue and these strips are placed in a first clamp of a tensile test bench,
   ∘ at the other end, only the spun glass fiber, the yarn end, is placed in the second clamp of the tensile test bench,
   ∘ wherein between the strips and the yarn end, a force is applied and measured.
   Herein, either the yarn and the PVC coating breaks, or the yarn slides out of the coating. This force is referred to as the shear force.

When fiber materials are processed into yarns, internal stresses build up. These stresses can eventually discharge, which brings about some changes in dimensions of the finished product. Differences in temperature and humidity differences can trigger these discharges. The dimension changes due to these potential discharges are called the potential contraction. These are measured according to EN 434:1995 and EN 1903:2008. In a preferred embodiment, the potential contraction of the finished product according to the invention is below 0.2 % of the original dimension.

The composite yarn according to the invention having a low potential contraction and a high wear resistance meets all the criteria to be used in floor or wall coverings.

In a third aspect, the invention provides a fabric woven from a composite yarn as described above.

In a fourth aspect, the invention provides a flooring comprising a fabric as described above and preferably one of the following sublayers: a flooring strip, a floor tile or a click system. These sublayers are preferably made of polyvinyl chloride.

In a fifth aspect, the present invention provides a semi-finished product suitable for processing into floor and wall covering comprising a carrier comprising non-woven glass fibers and polyvinyl chloride (PVC) and a top layer comprising a flat woven cloth made from composite yarns.

In a classic flooring, such as, for example, knotted carpet, whereby use is made of yarns that are positioned at right angles onto a sublayer and on the one hand, are set up moveably, the yarns may camouflage the seams due to contraction because the yarns overlap these seams. When using a flat cloth 2 in the flooring, the yarns are oriented in a direction parallel to the sublayer and the yarns cannot overlap the formed seams. As a result, the effect of contraction is very noticeable and is considered as disturbing. A flooring using a flat cloth 2 must thus also be very dimensionally stable. By applying a layer of non-woven glass fiber just under the top layer 1, the dimensional stability is significantly increased and in this way, contraction is considerably reduced.

In a preferred embodiment, a semi-finished product suitable for processing into floor and wall covering comprises a carrier 3, non-woven glass fibers 4 embedded in polyvinyl chloride (PVC) and a top layer 1 comprising a flat woven cloth 2 made of composite yarns, wherein carrier 3 and flat woven cloth 2 are fused together and form one whole.

Because the carrier 3 and the composite yarns of the flat woven cloth 2 are fused together and form one whole with the non-woven glass fibers 4enclosed therein, the semi-finished product is less susceptible to contraction. The non-woven fibers 4 form a reinforcement in the carrier which is deeply connected to the flat woven cloth 2, mechanical forces have much less influence on the expansion and contraction of the semi-finished product. This ultimately has as a result that the seams between different parts of semi-finished product enlarge less due to contraction and in the long term, enlarge less visibly. An additional feature of forming one whole between carrier 3 and flat woven cloth 2 is that less wear occurs because the composite yarns forming the surface of the final flooring are anchored to the wearer and in that way have less to no ability to move. As a result, the composite yarn cannot rub over one another and the wear resistance increases. Each composite yarn is mechanically supported by the carrier, so that each composite yarn obtains a higher wear resistance.

In a preferred embodiment, the polyvinyl chloride material of the carrier 3 penetrates into the flat woven cloth 2, so that the polyvinyl chloride (PVC) material of the carrier 3 fuses with the polyvinyl chloride material of the flat woven cloth 2. The fibers of the non-woven glass-fiber 4, which are located in the carrier 3, are also located partly in between the yarns of the flat woven cloth 2.

As a result, the semi-finished product comprising flat woven cloth 2, carrier and non-woven glass fiber 4 forms one whole and because the fibers of the non-woven glass fiber 4 are spread across the whole carrier 3 up to between the yarns of the flat woven cloth 2, these act as a reinforcement, which makes the whole more rigid and more resistant to contraction and mechanism forces which act on the semi-finished product.

In a preferred embodiment, the semi-finished product suitable for processing into floor or wall covering has a wear resistance of the top layer 1 which corresponds to a mass loss of less than 30 g/m² measured according to a Lisson test EN 1963:2007. The result hereof is that the semi-finished product for flooring is divided in use class 33 (EN 15.114: 2006 and A1: 2008 and/or EN 1307), suitable for frequent commercial use in public places and is suitable for frequent use under chairs with swivel wheels (EN 985).

In a preferred embodiment, the flat woven cloth 2 is made of a composite yarn composed of a core of spun glass fiber and a coating of polyvinyl chloride (PVC). The polyvinyl chloride (PVC) coating has a shear force of more than 20 N according to a test wherein:
∘ a composite yarn is deprived on one side of the polyvinyl chloride coating, so that still 15 cm of polyvinyl coating remains around the core of spun glass fiber,
∘ the still coated end of the composite yarn is glued at one end between two non-woven polyester (PES) strips of 2 cm wide and over a length of 2 cm with a polyacrylate glue and these strips are placed in a first clamp of a tensile test bench,
∘ at the other end, only the spun glass fiber, the yarn end, is placed in the second clamp of the tensile test bench,
∘ wherein between the strips and the yarn end, a force is applied and measured.

Herein, either the yarn and the PVC coating breaks, or the yarn slides out of the coating. This force is referred to as the shear force.
This also contributes to the subdivision in use class 33 (EN 15.114: 2006 and A1: 2008 and/or EN 1307) suitable for frequent commercial use in public places and is suitable for frequent use under chairs with swiveling wheels (EN 985).

In a preferred embodiment, the number of yarns in weft direction, for example, 8 yarns per centimeter, is higher than 66% of the number of yarns in warp direction, for example, 12 yarns per centimeter, more preferably higher than 80%, for example 10 yarns in the weft direction relative to 12 yarns in the warp direction per centimeter, and most preferably 100%. As a result, the properties such as wear resistance of the semi-finished product in both directions are not too different. The wear resistance corresponds to a mass loss, in both the longitudinal and transverse or warp and weft direction, which is not greater than 30 grams per square meter according to Lisson test, EN 1963:2007. Striving for an approximately equal number of yarns in both directions slows down the weaving but is necessary in order to deliver a high-quality material. The allocation of the use class 33 is, after all, made on the basis of a mass loss of less than 30 g/m² in both warp and weft direction.

In a preferred embodiment, the composite yarns used in the flat woven cloth 2 are fused together. The fusion is done in an oven in which the cloth 2 is heated to 175ºC with hot air. As a result, the PVC coating of the composite yarn melts and after cooling, the different yarns form a network in which the contact surfaces of the yarns are connected to one another. This procedure is also referred to as heat fixation. Executing such a procedure has the result that the dimensional stability of the cloth 2 is dramatically increased, it also is beneficial for the wear resistance as the cloth 2 has become a whole and in this way, is able to better absorb and spread forces over a larger surface area. A part of the potential contraction is removed as the internal stresses have been able to discharge during the heating and because of the melting together, it is impossible for some internal stresses to still discharge. This procedure also makes it easier to process the flat cloth 2 into a finished material, in particular the application of this treated cloth 2 onto a carrier 3 or sublayer is much simpler if the cloth 2 is fused into one whole. When the yarns of the cloth 2 are not fused together, distortions of the weave pattern may occur when applying onto a sublayer or carrier; by fusing the yarns together, these can no longer move with respect to one another and distortions are eliminated.

In a preferred embodiment, the flat cloth 2 is connected with the carrier 3, this occurs because the carrier 3 is made of a plastisol in which a layer of non-woven glass fiber 4 is applied. The plastisol and the glass fiber are spread out into a thin layer and in the liquid plastisol, the flat woven cloth 2 is applied. This is followed by an increase in the temperature, as a result of which the plasticizer which is abundantly present in the plastisol, penetrates in the polyvinyl chloride coating of the flat woven cloth 2, and in this way connects the coating with the polyvinyl chloride of the plastisol. By this, carrier 3 and flat woven cloth 2 become a whole and the cloth 2 is even further reinforced with a non-woven glass fiber 4, as a result of which the dimensional stability is increased.

In a preferred embodiment, the carrier 3 comprises a plasticizer, preferably selected from the list diisodecyl phthalate (DIDP), diisononyl phthalate (DINP), dioctyl terephthalate (DOTP) or diisononyl-1,2-cyclohexane dicarboxylate (DINCH) or an ester of an alkyl sulphonic acid and phenol. More preferably, an ester of an alkyl sulphonic acid and phenol, a commercial equivalent of this product is Mesamoll® of LANXESS Deutschland GmbH. The latter has the advantage that the plasticizer exhibits a low migration and it is a healthy alternative to phthalates.

In a preferred embodiment, the carrier 3 comprises a transparent polyvinyl chloride resin. The color of the carrier 3 becomes white because of the glass fibers present in the carrier 3. The underlying color is recognized through the structure of the flat woven cloth 2 and generally the sublayer for flooring is black. When the carrier 3 is made from a transparent resin, the color of the sublayer does not come through the cloth 2. In this manner, differences in color in the sublayer are also not visible in the final finished floor. This carrier 3 also allows to use a cloth 2 having an open fabric without the color of the sublayer being seen.

In a preferred embodiment, the semi-finished product has a potential contraction lower than 0.2 % measured according to EN 434:1995. Because of this low potential contraction, the seams between the different parts hardly become larger and visible.

In a sixth aspect, the invention provides a method for producing a semi-finished product suitable for processing into floor and wall covering as mentioned above, comprising the following steps:
- weaving a flat cloth preferably from composite yarn and preferably with yarns fused together;
- mixing glass fibers and plastisol and spreading out in a layer;
- applying the flat woven cloth onto the plastisol glass fiber layer;
- heating the flat woven cloth and the plastisol glass fiber layer to a temperature above 150°C;
- cooling the flat woven cloth and the plastisol glass fiber layer to a temperature below 60°C, preferably below 50°C, more preferably below 40°C, even more preferably below 30°C, most preferably below 20ºC

The method has the advantage that the yarns of the flat cloth 2 are first melted together before connecting it with the carrier 3. The flat cloth 2 which is dimensionally stabilized by the fusing, is easier to apply onto the liquid plastisol layer without distorting the weave pattern.

Preferably, the method comprises the gluing of said semi-finished product with a sublayer or a sheet material. The sublayer is preferably a floor tile a flooring strip or a click system. For wall covering, this sheet material may be provided with sound-absorbing elements, so that the sheet material is an acoustic panel.

In a preferred embodiment, the method comprises the step of calendering the flat woven cloth 2 with the still liquid carrier 3 in which the non-woven glass fiber 4 is applied. Preferably, herein, a calender roll is used which is provided with protrusions, thereby exerting a point load onto the semi-finished product. Preferably, the pressure which is exerted on the semi-finished product during calendering, depends on the pattern of the flat woven cloth. Some patterns have the consequence that the flat woven cloth is thicker than other ones, as a result of which a greater pressure is needed to press the carrier 3 into the flat woven cloth 2.

By this, the still liquid carrier 3 material is at least partially pressed into the flat woven cloth 2, where where it can then fuse with the material of the composite yarns and/or cure. In this way, also the non-woven glass fibers 4 are pressed deeply into the carrier 3, and the fibers will partly be located between the composite yarns of the flat woven cloth 2. As a result, one whole is formed between the carrier 3 and the flat woven cloth 2. The non-woven glass fiber forms a reinforcement which ensures a higher resistance to contraction and provides a greater mechanical strength to the semi-finished product.

In a seventh aspect, the invention provides a flooring material comprising the semi-finished product described above, which is arranged applied onto a sublayer in the form of a polyvinyl chloride tile 5.

The sublayer itself preferably has a minimum thickness of 2 mm. The application of the semi-finished product onto a tile 5 sublayer has the advantage that the flooring material can be placed in a simple manner. The measurements of the tiles 5 are in such way that they can be handled in a simple manner.

In an eighth aspect, the invention provides a flooring material comprising the semi-finished product described above, which is applied onto a sublayer in the form of a polyvinyl chloride flooring strip with a minimum thickness of preferably 1 mm.

The flooring strip 6 has much larger dimensions, such as a width of 2 meters, and ensures that the number of seams is greatly reduced. The larger dimensions, however, set high demands on the dimensional stability of the material, in particular on the maximum contraction. The semi-finished product according to the present invention is, due to the increased stability and reduced contraction, thus extremely suitable to be used in a flooring material in the form of a flooring strip.

In a preferred embodiment, the flooring material is provided with a click system 7 in the sublayer. The click system 7 allows placement without the use of any connection means, and the components do not need to be glued to the subsurface. The sublayer is sufficiently heavy so that the floor can be placed as floating.

In a preferred embodiment, a base layer 8 is arranged below the sublayer, the base layer provides an additional thermal and acoustic insulation, and can eliminate small bumps in the subsurface.

In a preferred embodiment, the flooring material has a maximum contraction as a result of varying humidity and temperature conditions of less than 0.07% measured according to EN 986:2006. This ensures that the seams between the flooring parts do not become visibly larger due to contraction.

In a preferred embodiment, the flooring material has a maximum potential contraction of less than 0.2% measured according to EN 986:2006. This ensures that the seams between the flooring parts do not become visibly larger due to contraction.

In a ninth aspect, the invention provides a method for producing a flooring material as described above, or a wall covering material comprising the following steps:
- applying a layer of plastisol or glue onto the sublayer:
- applying the semi-finished product onto the layer of plastisol or glue;
- heating the sublayer, plastisol or glue and semi-finished product to a temperature above 150°C.
- cooling the sublayer, plastisol or glue and semi-finished product to a temperature below 60°C, preferably below 50°C, more preferably below 40°C, even more preferably below 30°C, most preferably below 20°C

This method allows that in a very simple way, a different sublayer can be used, this sublayer may consist of a medium density fibreboard (MDF), high density fiber board (HDF), fiber board, wood, paper, linen or a polymer, such as PVC.

In a tenth aspect, the invention provides a combination of an adhesive for gluing the flooring materials with a subsurface and a low migration plasticizer in a polyvinyl chloride (PVC) sublayer of a flooring material.

The plasticizer is preferably selected from the list of diisodecyl phthalate (DIDP), diisononyl phthalate (DINP), dioctyl terephthalate (DOTP), or diisononyl-1,2-cyclohexane dicarboxylate (DINCH). More preferably, the plasticizer is an ester of an alkyl sulphonic acid and phenol, a commercial equivalent of this product is Mesamoll® of LANXESS Deutschland GmbH. The adhesive is a water-based polyacrylate glue filled with a synthetic resin. When using this plasticizer and this glue, it appears that there is a minimum migration of plasticizer from the sublayer to the adhesive. Consequently, the sublayer will remain dimensionally stable (a contraction lower than 0.2%) as the sublayer ages and seams between the flooring materials also do not become visibly larger.

In a preferred embodiment, the plasticizer is an ester of an alkyl sulphonic acid and phenol, a commercial equivalent of this product is Mesamoll® of LANXESS Deutschland GmbH, and the adhesive is a water-based polyacrylate glue filled with a synthetic resin.

In an eleventh aspect, the invention provides a flooring material with a sublayer of polyvinyl chloride (PVC) comprising a low migration plasticizer selected from the above-presented list of plasticizers.

This flooring material is preferably glued to a subsurface with an adhesive which is a water-based polyacrylate glue filled with a synthetic resin. The choice of adhesive and plasticizer ensures that the contraction as a result of migration of plasticizer from the sublayer to the adhesive is under 0.2% of the original dimensions.

In a preferred embodiment, the sublayer of this flooring material is glued to a subsurface by means of an adhesive selected from the above-presented list of adhesives.

In a preferred embodiment, a top layer 1 is present in the flooring material, this top layer 1 comprises a woven cloth. In a further preferred embodiment, the flooring material comprises a flat woven cloth 2 in the top layer 1. A flat woven cloth as flooring is in contrast to, for example, a knotted carpet, easy to maintain; because of the structure of a flat woven cloth, almost no dirt is retained between the yarns.

In a preferred embodiment, a carrier 3 is arranged between the top layer 1 and the sublayer, this carrier 3 is preferably made of polyvinyl chloride (PVC) resin reinforced with a non-woven glass fiber structure 4. The presence of the carrier 3 provides a greater dimensional stability of the flooring material as a result of differences in temperature and loss of plasticizer.

In a preferred embodiment, the flat woven cloth is made of a composite yarn comprising a spun glass fiber thicker than 5 microns, thinner than 1000 microns and a coating of polyvinyl chloride (PVC) thicker than 100 micron and thinner than 2000 microns. The woven cloth in this way has a durability such as that of polyvinyl chloride (PVC) and a high tensile strength such as that of glass fibers. But is not as brittle as glass fiber and stretchable as polyvinyl chloride (PVC) with plasticizer.

In a preferred embodiment, the flooring material has a wear resistance of the top layer 1 which corresponds to a mass loss of less than 30 g/m² according to a Lisson test EN 1963:2007. This is beneficial for the durability of the flooring material; as a result, the flooring material can be divided into the use class 33 according to EN 685:2007.

In a preferred embodiment, the sublayer comprises a filler, preferably chalk (CaCO3). The filler makes the production of the sublayer significantly cheaper and provides the sublayer with the necessary weight so that the flooring material does not always have to be bonded with the subsurface.

In a preferred embodiment, the flooring material comprises a sublayer in the form of a polyvinyl chloride floor tile 5. The floor tile 5 has the advantage that the flooring material can be placed in a simple manner. The dimensions of the floor tiles 5 are arranged in such way that they can be handled in a simple way.

In a preferred embodiment, the flooring material comprises a sublayer in the form of a polyvinyl chloride flooring strip 6. The flooring strip 6 has much larger dimensions than the floor tile and ensures that the number of seams is greatly reduced.

In a preferred embodiment, the sublayer of the flooring material comprises a click system 7. The click system 7 allows placement without the use of any connection means, and the components do not need to be glued to the subsurface. The sublayer is sufficiently heavy so that the floor can be placed as floating.

In a preferred embodiment, the flooring material applied with the adhesive has a contraction as a result of loss of plasticizer upon aging of less than 0.2 percent of the original dimensions. This was measured according to EN 1903:2008.

In a third aspect, the invention provides a kit provided comprising a flooring material, such as a tile, a flooring strip or a click system, comprising a low migration plasticizer selected from the above-presented list of the plasticizers, and an adhesive for adhering the flooring material to a subsurface, which is a water-based polyacrylate glue filled with a synthetic resin.

In a fourth aspect, the invention provides a method for gluing a flooring material to a subsurface wherein the flooring material comprises a sublayer of polyvinyl chloride (PVC), the sublayer comprises a low migration plasticizer selected from the above-presented list of plasticizers, and the flooring is glued with an adhesive which is a water-based polyacrylate glue filled with a synthetic resin.

The invention relates to:
- A method for producing a composite yarn, comprising a spun glass fiber preferably thicker than 5 microns, preferably thinner than 1000 microns and a coating of polyvinyl chloride (PVC) preferably thicker than 100 microns and preferably thinner than 2000 microns, comprising the following steps:
   ∘ heating the spun glass fiber to a first temperature;
   ∘ passing the still hot spun glass fiber through a molten polyvinyl chloride (PVC) resin at a second temperature;
   ∘ let the molten resin solidify around the spun glass fiber in a cooling bath;
   wherein the first temperature is higher than the second temperature and the temperature of the cooling bath is lower than 30°C;
- The above method for producing a composite yarn wherein the first temperature is between 200°C and 300°C, preferably 250°C.
- One of the above methods for producing a composite yarn wherein the second temperature is between 125ºC and 190ºC, preferably 175ºC.
- One of the above methods for producing a composite yarn wherein the molten polyvinyl chloride (PVC) resin is fed by 2 separate extruders.
- One of the above methods for producing a composite yarn wherein the spun glass fiber is in contact with molten polyvinyl chloride (PVC) resin for a period of less than 10 milliseconds (ms), preferably less than 1 ms.
- One of the above methods for producing a composite yarn wherein the period of time that the coated fiber is situated in the cooling bath has a length of less than 2 seconds.
- One of the above methods for producing a composite yarn wherein the cooling bath consists of multiple segments.
- One of the above methods for producing a composite yarn wherein the speed at which the fiber goes through the molten resin is determined by a thickness measurement after leaving the cooling bath.
- One of the above methods for producing a composite yarn wherein the speed at which the spun glass fiber is passed through the molten polyvinyl chloride (PVC) resin is between 100 m/min and 900 m/min, preferably around 500 m/min.
- A composite yarn produced according to one of the above methods, comprising a spun glass fiber thicker than 5 microns, thinner than 1000 microns and a coating of polyvinyl chloride (PVC) thicker than 100 micron and thinner than 2000 microns.
- The above composite yarn with a wear resistance corresponding to a mass loss of less than 30 g/m² measured according to a Lisson test EN 1963:2007 when this yarn is used as a top layer in flooring.
- One of the above composite yarns wherein the polyvinyl chloride coating has a shear force of more than 20 N according to a test:
   ∘ wherein a coated yarn with a length of 15 cm at one end is glued with a polyacrylate glue between two non-woven polyester (PES) strips of 2 cm,
   ∘ wherein the other end is placed in a clamp of a tensile test bench so that 15 cm of coated yarn remains,
   ∘ wherein between the strips and the yarn end a force is applied and measured,
   wherein herein either the yarn and the PVC coating breaks, or the yarn slides out of the coating, wherein the force is called the shear force.
- A fabric woven from one of the above composite yarns.
- A flooring comprising the above fabric and preferably one of the following sublayers: a flooring strip, a floor tile or a click system.
- A semi-finished product suitable for processing into floor and wall covering comprising a carrier 3 comprising non-woven glass fibers 4 and polyvinyl chloride (PVC) and a top layer 1 comprising a flat woven cloth 2 made of composite yarns.
- The above semi-finished product suitable for processing into floor and wall covering wherein the wear resistance of the top layer 1 corresponds to a mass loss of less than 30 g/m² measured according to a Lisson test EN 1963:2007.
- One of the above semi-finished products suitable for processing into floor and wall covering wherein the composite yarn is composed of a spun glass fiber core and a polyvinyl chloride coating.
- One of the above semi-finished products suitable for processing into floor and wall covering wherein the composite yarn has a shear force of more than 20 N according to a test:
   ∘ wherein a coated yarn with a length of 15 cm is glued at one end between two non-woven polyester (PES) strips of 2 cm wide and over a length of 2 cm with a polyacrylate glue,
   ∘ wherein the other end is placed in a clamp of a tensile test bench so that 15 cm of coated yarn remains,
   ∘ wherein between the strips and the yarn end a force is applied and measured,
   wherein herein, either the yarn and the PVC coating breaks, or the yarn slides out of the coating, wherein the force is called the shear force.
- One of the above semi-finished products suitable for processing into floor and wall covering wherein the pattern of the flat woven cloth 2 has a number of yarns in the weft direction at least equal to 66% of the number of yarns in the warp direction.
- One of the above semi-finished products suitable for processing into floor and wall covering wherein the composite yarns of the flat woven cloth 2 are fused together.
- One of the above semi-finished products suitable for processing into floor and wall covering wherein the flat woven cloth 2 and the carrier 3 are connected to one another.
- One of the above semi-finished products suitable for processing into floor and wall covering wherein the carrier comprises an ester of an alkyl sulphonic acid and phenol as a plasticiser.
- One of the above semi-finished products suitable for processing into floor and wall covering wherein the polyvinyl chloride in the carrier 3 is transparent.
- One of the above semi-finished products suitable for processing into floor and wall covering wherein the wear resistance of the top layer 1 corresponds to a mass loss which, in both the longitudinal and transverse direction or warp and weft direction, is not greater than 30 grams per square meter according to the Lisson test, EN 1963:2007.
- One of the above semi-finished products suitable for processing into floor and wall covering wherein the potential contraction is less than 0.2% measured according to EN 434:1995.
- Method for producing one of the above semi-finished products, comprising the following steps:
   ∘ weaving a flat cloth 2 preferably from composite yarn and preferably yarns fused together;
   ∘ mixing glass fibers and plastisol and spreading it out in a layer;
   ∘ applying the flat woven cloth 2 onto the plastisol glass fiber layer;
   ∘ heating the flat woven cloth 2 and the plastisol glass fiber layer to a temperature above 150°C;
   ∘ cooling the flat woven cloth 2 and the plastisol glass fiber layer to a temperature below 60°C, preferably below 50°C, more preferably below 40°C, even more preferably below 30°C, most preferably below 20°C.
- A flooring material comprising one one of the above semi-finished products and a polyvinyl chloride (PVC) tile 5 as sublayer having a thickness of minimum 2 mm.
- A flooring material comprising one one of the above semi-finished products and a polyvinyl chloride (PVC) flooring strip 6 as sublayer having a thickness of minimum 1 mm.
- A flooring material comprising one of the above semi-finished products and a click system 7 in the sublayer.
- One of the above flooring materials wherein the contraction caused by varying humidity and temperature conditions is less than 0.07% measured according to EN 986:2006.
- One of the above flooring materials wherein the potential contraction is less than 0.2% measured according to EN 434:1995.
- A method for producing one of the above flooring materials or a wall covering material comprising the following steps:
   ∘ applying a layer of plastisol or glue onto the sublayer;
   ∘ applying the semi-finished product onto the layer of plastisol or glue;
   ∘ heating the sublayer, plastisol or glue and semi-finished product to a temperature above 150°C.
   ∘ cooling the sublayer, plastisol or glue and semi-finished product to a temperature below 60°C, preferably below 50°C, more preferably below 40°C, even more preferably below 30°C, most preferably below 20°C.
- A combination, suitable for gluing flooring materials with a subsurface, of:
   ∘ a low migration plasticizer in a polyvinyl chloride (PVC) sublayer of the flooring material selected from the list of diisodecyl phthalate (DIDP), diisononyl phthalate (DINP), dioctyl terephthalate (DOTP), diisononyl-1,2-cyclohexane dicarboxylate (DINCH), or an ester of an alkyl sulphonic acid and phenol; and
   ∘ an adhesive which is a water-based polyacrylate glue filled with a synthetic resin.
- The above combination of an adhesive and a low migration plasticizer wherein the plasticizer is an ester of an alkyl sulphonic acid and phenol.
- One of the above combinations of an adhesive and a low migration plasticizer wherein the adhesive is a water-based polyacrylate glue filled with a synthetic resin.
- A flooring material with a sublayer of polyvinyl chloride (PVC) comprising a low migration plasticizer selected from the list of diisodecyl phthalate (DIDP), diisononyl phthalate (DINP), dioctyl terephthalate (DOTP), diisononyl-1,2-cyclohexane dicarboxylate (DINCH) or an ester of an alkyl sulphonic acid and phenol, wherein preferably a top layer 1 is present in the flooring material comprising a woven cloth.
- The above flooring material, wherein the woven cloth is a flat woven cloth 2.
- One of the above flooring materials wherein a carrier (3) is applied between the sublayer and the top layer (1) of the flooring material, made of a composite comprising non-woven glass fibers (4) and polyvinyl chloride (PVC).
- One of the above flooring materials wherein the flat woven cloth is woven from a composite yarn comprising a spun glass fiber thicker than 5 microns, thinner than 1000 microns and a coating of polyvinyl chloride (PVC) thicker than 100 micron and thinner than 2000 microns.
- One of the above flooring materials wherein the top layer (1) has a wear resistance in accordance with a mass loss of less than 30 g/m² measured according to a Lisson test EN 1963:2007.
- One of the above flooring materials wherein the sublayer comprises a filler, preferably chalk (CaCO₃).
- One of the above flooring materials wherein the sublayer is in the form of a floor tile (5).
- One of the above flooring materials wherein the sublayer is in the form of a flooring strip (6).
- One of the above flooring materials wherein the sublayer comprises a click system (7).
- One of the above flooring materials wherein the contraction due to loss of plasticizer upon aging is less than 0.2 percent measured according to EN 1903:2008.
- A kit comprising:
   ∘ one of the above flooring materials, preferably in the form of a tile, a flooring strip or a click system; and
   ∘ an adhesive for adhering the flooring material onto a subsurface, which is a water-based polyacrylate glue filled with a synthetic resin.
- Method for gluing a flooring material onto a subsurface wherein:
   ∘ the flooring material comprises a sublayer of polyvinyl chloride (PVC), the sublayer comprising a low migration plasticizer selected from the list of diisodecyl phthalate (DIDP), diisononyl phthalate (DINP), dioctyl terephthalate (DOTP), diisononyl-1,2-cyclohexane dicarboxylate (DINCH), or an ester of an alkyl sulphonic acid and phenol; and
   ∘ the flooring is glued with an adhesive which is a water-based polyacrylate glue filled with a synthetic resin.

In what follows, the invention is described by means of non-limiting examples which illustrate the invention, and which are not intended or should be interpreted to limit the scope of the invention.

### EXAMPLES

The invention will now be elucidated with reference to annexed drawings of a random embodiment example, to which the invention is not limited.

### EXAMPLE 1 :

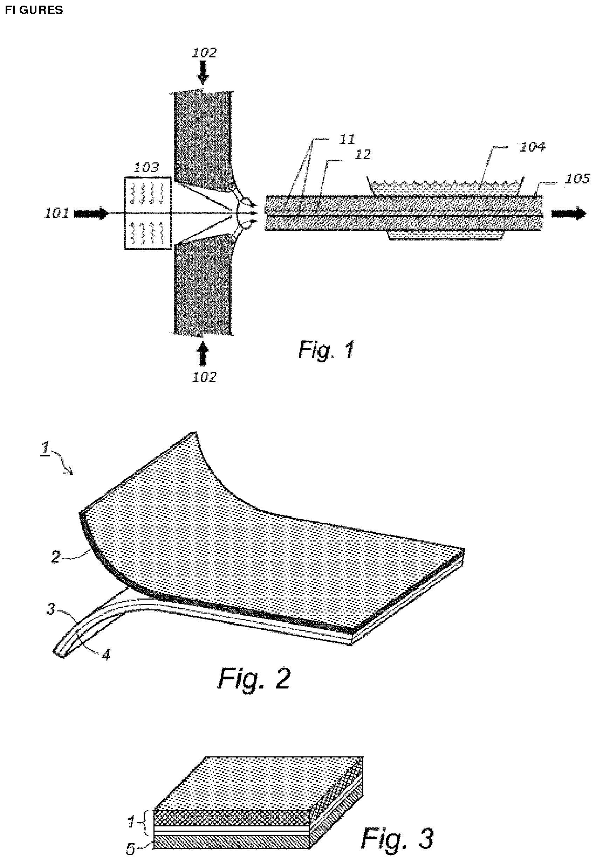

Figure 1 shows the production process for manufacturing a composite yarn according to a preferred embodiment of the invention. A spun glass fiber 101 with a diameter of between 100 and 200 microns is heated to 250°C before it is passed through an extrusion nozzle in which it is brought into contact with liquid polyvinyl chloride 102 (PVC) at a temperature of 175ºC. Immediately after leaving the extrusion nozzle, the coated fiber is led through a cooling bath 105 at a temperature of 20°C.

Heating the spun glass fiber is done in an oven 103, the coated spun glass fiber 12 is provided with a coating of polyvinyl chloride 11 (PVC).

The obtained composite yarn 105 has a thickness of 300 microns, a wear resistance < 30 g/m² measured according to EN 1963:2007 LISSON and a potential contraction of less than 0.2% of the original dimensions.

### EXAMPLE 2: Measuring the shear force

For this, the coated fiber having a length of 15 cm is glued at one end between two non-woven polyester (PES) strips of 2 cm wide and over a length of 2 cm with a polyacrylate glue. The other end is placed in a clamp of a tensile test bench. Between the strips and the yarn end, a force is applied and it is measured. Either, the yarn and the PVC coating breaks, or the yarn slides out of the coating. This force is called the shear force and is shown in the table below.

| Fibers produced without pre-heating | Fibers produced with pre-heating |
|---|---|
| 4-6 N | 24-30 N |

### EXAMPLE 3:

Lisson test (EN 1963:2007), herein, the yarns were processed in a top layer in a flooring material. The yarns were woven into a flat woven cloth, followed by a heat fixation process by which the yarns fuse together. This cloth was applied onto a non-woven glass fiber reinforced carrier with a plastisol. After which, this whole was again completely applied onto a polyvinyl chloride plastisol sublayer. Care was taken to ensure that all of the parameters in this process are the same for the two different yarns.

| Fibers produced without pre-heating | Fibers produced with pre-heating |
|---|---|
| 300 g/m² | < 30 g/m² to 8 g/m² |

### EXAMPLE 4:

Figure 1 shows a set-up for the production of a composite yarn according to an embodiment of the invention.

### EXAMPLE 5:

Figure 2 shows a representation of the above-mentioned semi-finished product 1. This is composed of two layers, a flat woven cloth 2 and a carrier 3. The carrier 3 itself is a composite of non-woven glass fibers 4 in a polyvinyl chloride (PVC) resin.

### EXAMPLE 6:

Figure 3 shows a representation of a floor tile. The semi-finished product is glued onto a layer of polyvinyl chloride comprising low migration plasticizers. The thickness of the sublayer and the mechanical properties of this sublayer satisfy in order to be used as floor tile.

### EXAMPLE 7:

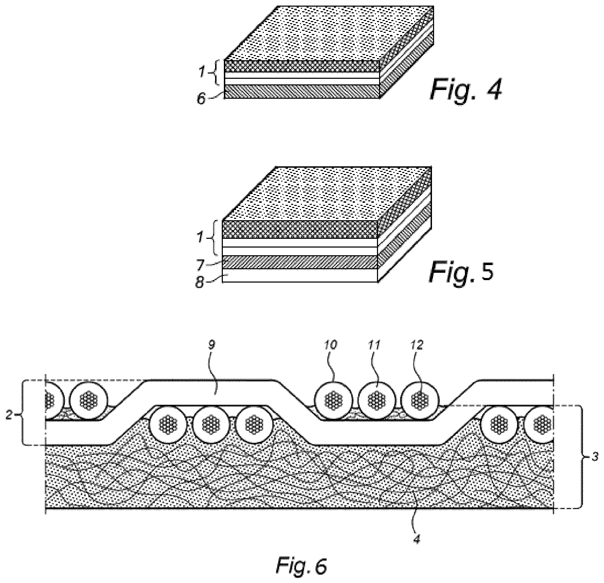

Figure 4 is a representation of a flooring strip. The semi-finished product is glued onto a sublayer of polyvinyl chloride comprising low migration plasticizers. The thickness of the sublayer and the mechanical properties of this sublayer satisfy in order to be used as flooring strip 6.

### EXAMPLE 8

Figure 5 shows a representation of a click system 7 with flooring. The semi-finished product is glued onto a click system 7. At the bottom of the click system 7, a base layer 8 is applied.

### EXAMPLE 9

Figure 6 is a cross-section of a semi-finished product according to an embodiment of the invention. On the figure, it can be seen how the material of the carrier 3 partly penetrates into between the composite yarns of the flat woven cloth 2. Both the composite yarns in the warp direction 10 as the composite yarns in the weft direction 9 are partly connected to the material of the carrier 3. The composite yarns themselves are composed of a core of spun glass fiber 12 with a coating of polyvinyl chloride 11 (PVC) around it. The fibers of the non-woven glass fiber 4 spread out over the whole thickness of the carrier 3 and are located partly between the composite yarns of the flat woven cloth 2.

It is considered that the present invention is not limited to the embodiments described above and that several modifications or changes can be added to the described examples without re-evaluation of the appended claims. For example, the present invention has been described with reference to a closed fabric, but it may be clear that the invention can be applied to, for example, an open fabric.

## Claims

1. A semi-finished product suitable for processing into floor and wall covering comprising a carrier (3) comprising non-woven glass fibers (4) embedded in polyvinyl chloride (PVC) and a top layer (1) comprising a flat woven cloth (2) made of composite yarn wherein carrier (3) and flat woven cloth (2) are fused together and form one whole, **characterized in that** the composite yarn (105) is composed of a spun glass fiber core (12) and a polyvinyl chloride coating (11).

2. Semi-finished product suitable for processing into floor and wall covering according to claim 1, **characterized in that** the material of the carrier (3) penetrates into the flat woven cloth (2) and the non-woven glass fibers (4) which are situated partly between the yarns of the flat woven cloth (2).

3. Semi-finished product suitable for processing into floor and wall covering according to at least one of the preceding claims, **characterized in that** the carrier (3) comprises an ester of an alkyl sulphonic acid and phenol as a plasticizer.

4. Semi-finished product suitable for processing into floor and wall covering according to at least one of the preceding claims, **characterized in that** the polyvinyl chloride in the carrier (3) is transparent.

5. Method for producing a semi-finished product according to at least one of the preceding claims, comprising the following steps:
- weaving a flat cloth (2) preferably from composite yarn and preferably with yarns fused together;
- mixing glass fibers and plastisol and spreading it out in a layer;
- applying the flat woven cloth (2) onto the plastisol glass fiber layer;
- heating the flat woven cloth (2) and the plastisol glass fiber layer to a temperature above 150°C, as a result of which the plastisol glass fiber layer and the flat woven cloth fuse together and form one whole;
- cooling the flat woven cloth (2) and the plastisol glass fiber layer to a temperature below 60°C, preferably below 50°C, more preferably below 40°C, even more preferably below 30°C, most preferably below 20°C.

6. Method for producing a semi-finished product according to claim 5, **characterized in that** the method comprises the step of calendering the flat woven cloth (2) with the still liquid carrier (3) in which the non-woven glass fiber (4) is applied.

7. A flooring material comprising a semi-finished product according to at least one of claims 1-4 and either:
- a poly vinyl chloride (PVC) tile (5) as a sublayer having a thickness of minimum 2 mm; or,
- a polyvinyl chloride (PVC) flooring strip (6) as a sublayer having a thickness of minimum 1 mm; and/or,
- a click system (7) in the sublayer.

8. Flooring material according to claim 7 having a sublayer of polyvinyl chloride (PVC) comprising a low migration plasticizer selected from the list of diisodecyl phthalate (DIDP), diisononyl phthalate (DINP), dioctyl terephthalate (DOTP), diisononyl-1,2-cyclohexane dicarboxylate (DINCH) or an ester of an alkyl sulphonic acid and phenol, wherein preferably a top layer (1) is present in the flooring material comprising a woven cloth.

9. A method for producing a flooring material according to claim 7 or 8 comprising the following steps:
- applying a layer of plastisol or glue onto the sublayer;
- applying the semi-finished product onto the layer of plastisol or glue;
- heating the sublayer, plastisol or glue and semi-finished product to a temperature above 150°C.
- cooling the sublayer, plastisol or glue and semi-finished product to a temperature below 60°C, preferably below 50°C, more preferably below 40°C, even more preferably below 30°C, most preferably below 20°C.

10. A method for producing a composite yarn, comprising a spun glass fiber preferably thicker than 5 microns, preferably less than 1000 microns and a coating of polyvinyl chloride (PVC) preferably thicker than 100 microns and preferably thinner than 2000 microns, comprising the following steps:
- heating the spun glass fiber to a first temperature;
- passing the still hot spun glass fiber through a molten polyvinyl chloride (PVC) resin at a second temperature;
- let the molten resin solidify around the spun glass fiber in a cooling bath;
wherein the first temperature is higher than the second temperature and the temperature of the cooling bath is lower than 30°C.

11. A method for producing a composite yarn according to claim 11, **characterized in that** the period of time that the coated fiber is situated in the cooling bath has a length of less than 2 seconds.

12. A composite yarn produced according to at least one of claims 11 or 12, comprising a spun glass fiber thicker than 5 microns, thinner than 1000 microns and a coating of polyvinyl chloride (PVC) thicker than 100 micron and thinner than 2000 microns.

13. A combination, suitable for gluing flooring materials with a subsurface, of:
- a low migration plasticizer in a polyvinyl chloride (PVC) sublayer of the flooring material selected from the list of diisodecyl phthalate (DIDP), diisononyl phthalate (DINP), dioctyl terephthalate (DOTP), diisononyl-1,2-cyclohexane dicarboxylate (DINCH) or an ester of an alkyl sulphonic acid and phenol; and
- an adhesive which is a water-based polyacrylate glue filled with a synthetic resin.

## Patentansprüche

1. Ein halbfertiges Produkt, das geeignet ist, zu Boden- und Wandbeläge verarbeitet zu werden, umfassend einen Träger (3), umfassend in Polyvinylchlorid (PVC) eingebettetes Vliesglasfasern (4) und eine Deckschicht (1), umfassend ein Flachgewebetuch (2), das aus einem Verbundgarn besteht, wobei der Träger (3) und das Flachgewebetuch (2) miteinander verschmolzen sind und ein Ganzes bilden, **dadurch gekennzeichnet, dass** das Verbundgarn (105) aus einen gesponnenen Glasfaserkern (12) und einer Polyvinylchloridbeschichtung (11) zusammengesetzt ist.

2. Halbfertiges Produkt, das geeignet ist, zu Boden- und Wandbeläge verarbeitet zu werden, nach Anspruch 1, **dadurch gekennzeichnet, dass** das Material des Trägers (3) in das Flachgewebetuch (2) und die Vliesglasfasern (4) eindringt, die sich teilweise zwischen den Garnen des Flachgewebetuchs (2) befinden.

3. Halbfertiges Produkt, das geeignet ist, zu Boden- und Wandbeläge verarbeitet zu werden, nach mindestens einem der vorhergehenden Ansprüche, **dadurch gekennzeichnet, dass** der Träger (3) einen Ester einer Alkylsulfonsäure und Phenol als einen Weichmacher umfasst.

4. Halbfertiges Produkt, das geeignet ist, zu Boden- und Wandbeläge verarbeitet zu werden, nach mindestens einem der vorhergehenden Ansprüche, **dadurch gekennzeichnet, dass** das Polyvinylchlorid in dem Träger (3) transparent ist.

5. Verfahren zur Herstellung eines halbfertigen Produkts nach mindestens einem der vorhergehenden Ansprüche, folgende Schritte umfassend:
- Weben eines flachen Tuchs (2), vorzugsweise aus Verbundgarn und vorzugsweise mit Garnen, die miteinander verschmolzen sind;
- Mischen von Glasfasern und Plastisol und Ausbreiten dessen als eine Schicht,
- Aufbringen des Flachgewebetuchs (2) auf die Plastisol-Glasfaser-Schicht,
- Erwärmen des Flachgewebetuchs (2) und der Plastisol-Glasfaser-Schicht auf eine Temperatur von über 150°C, wodurch die Plastisol-Glasfaser-Schicht und das Flachgewebetuch miteinander verschmelzen und ein Ganzes bilden,
- Kühlen des Flachgewebetuchs (2) und der Plastisol-Glasfaser-Schicht auf eine Temperatur von unter 60°C, vorzugsweise unter 50°C, bevorzugter unter 40°C, noch bevorzugter unter 30°C, am meisten bevorzugt unter 20°C.

6. Verfahren zur Herstellung eines halbfertigen Produkts nach Anspruch 5, **dadurch gekennzeichnet, dass** das Verfahren den Schritt des Kalandrierens des Flachgewebetuchs (2) mit dem noch flüssigen Träger (3), in den die Vliesglasfaser (4) eingebracht wird, umfasst.

7. Ein Bodenbelagsmaterial, ein halbfertiges Produkts nach mindestens einem der Ansprüche 1-4 umfassend, und entweder:
- eine Polyvinylchlorid(PVC)-Kachel (5) als einer Unterschicht mit einer Dicke von mindestens 2 mm; oder,
- einen Polyvinylchlorid(PVC)-Bodenbelagsstreifen (6) als eine Unterschicht mit einer Dicke von mindestens 1 mm; und/oder,
ein Klicksystem (7) in der Unterschicht.

8. Bodenbelagsmaterial nach Anspruch 7, eine Unterschicht aus Polyvinylchlorid (PVC) aufweisend, die einen migrationsarmen Weichmacher umfasst, der aus der Liste von Diisodecylphthalat (DIDP), Diisononylphthalat (DINP), Dioctylterephthalat (DOTP), Diisononyl-1,2-cyclohexandicarboxylat (DINCH) oder einem Ester einer Alkylsulfonsäure und Phenol ausgewählt ist, wobei vorzugsweise eine Deckschicht (1) in dem Bodenbelagsmaterial vorhanden ist, die ein Gewebe umfasst.

9. Ein Verfahren zur Herstellung eines Bodenbelagsmaterials nach Anspruch 7 oder 8, die folgenden Schritte umfassend:
- Aufbringen einer Schicht aus Plastisol oder Klebstoff auf die Unterschicht;
- Aufbringen des halbfertigen Produkts auf die Schicht aus Plastisol oder Klebstoff;
- Erwärmen der Unterschicht, des Plastisols oder Klebstoffs und des halbfertigen Produkts auf eine Temperatur von über 150°C.
- Kühlen der Unterschicht, des Plastisols oder Klebstoffs und des halbfertigen Produkts auf eine Temperatur von unter 60°C, vorzugsweise unter 50°C, bevorzugter unter 40°C, noch bevorzugter unter 30°C, am meisten bevorzugt unter 20°C.

10. Ein Verfahren zur Herstellung eines Verbundgarns, das eine gesponnene Glasfaser umfasst, vorzugsweise dicker als 5 Mikrometer, vorzugsweise weniger als 1000 Mikrometer, und eine Beschichtung aus Polyvinylchlorid (PVC), vorzugsweise dicker als 100 Mikrometer und vorzugsweise dünner als 2000 Mikrometer, die folgenden Schritte umfassend:
- Erwärmen der gesponnenen Glasfaser auf eine erste Temperatur;
- Führen der noch heißen gesponnenen Glasfaser durch ein geschmolzenes Polyvinylchlorid(PVC)-Harz bei einer zweiten Temperatur;
- Verfestigen lassen des geschmolzenen Harzes um die gesponnene Glasfaser herum in einem Kühlungsbad;
wobei die erste Temperatur höher als die zweite Temperatur ist und die Temperatur des Kühlungsbades geringer als 30°C ist.

11. Ein Verfahren zur Herstellung eines Verbundgarns nach Anspruch 11, **dadurch gekennzeichnet, dass** die Zeitspanne, in der sich die beschichtete Faser in dem Kühlungsbad befindet eine Dauer von weniger als 2 Sekunden hat.

12. Ein Verbundgarn, hergestellt nach mindestens einem der Ansprüche 11 oder 12, eine gesponnene Glasfaser, dicker als 5 Mikrometer, dünner als 1000 Mikrometer, und eine Beschichtung aus Polyvinylchlorid (PVC), dicker als 100 Mikrometer und dünner als 2000 Mikrometer, umfassend.

13. Eine Kombination, geeignet zum Verkleben von Bodenbelagsmaterialien mit einem Untergrund, aus:
- einem migrationsarmen Weichmacher in einer Polyvinylchlorid(PVC)-Unterschicht des Bodenbelagsmaterials, der aus der Liste von Diisodecylphthalat (DIDP), Diisononylphthalat (DINP), Dioctylterephthalat (DOTP), Diisononyl-1,2-cyclohexandicarboxylat (DINCH) oder einem Ester einer Alkylsulfonsäure und Phenol ausgewählt ist; und
- einen Haftstoff, der ein Polyacrylatkleber auf Wasserbasis, aufgefüllt mit einem synthetischen Harz, ist.

## Revendications

1. Produit semi-fini apte à être transformé en revêtement de sol et de mur, comprenant un support (3) comprenant des fibres de verre non tissées (4) noyées dans du chlorure de polyvinyle (PVC) et une couche supérieure (1) comprenant une étoffe tissée plate (2) en fil composite, dans lequel le support (3) et l'étoffe tissée plate (2) sont fusionnés ensemble et forment un ensemble, **caractérisé en ce que** le fil composite (105) est composé d'une âme en fibre de verre filé (12) et d'un revêtement de chlorure de polyvinyle (11).

2. Produit semi-fini apte à être transformé en revêtement de sol et de mur selon la revendication 1, **caractérisé en ce que** le matériau du support (3) pénètre dans l'étoffe tissée plate (2) et les fibres de verre non tissées (4) qui sont situées en partie entre les fils de l'étoffe tissée plate (2).

3. Produit semi-fini apte à être transformé en revêtement de sol et de mur selon au moins l'une des revendications précédentes, **caractérisé en ce que** le support (3) comprend un ester d'un acide sulfonique alkyle et de phénol en tant que plastifiant.

4. Produit semi-fini apte à être transformé en revêtement de sol et de mur selon au moins l'une des revendications précédentes, **caractérisé en ce que** le chlorure de polyvinyle dans le support (3) est transparent.

5. Procédé de fabrication d'un produit semi-fini selon au moins l'une des revendications précédentes, comprenant les étapes suivantes :
- tisser une étoffe plate (2), de préférence à partir de fil composite, et de préférence avec des fils fusionnés ensemble ;
- mélanger des fibres de verre et du plastisol et étaler en une couche ;
- appliquer l'étoffe tissée plate (2) sur la couche de fibres de verre-plastisol ;
- chauffer l'étoffe tissée plate (2) et la couche de fibres de verre-plastisol à une température supérieure à 150 °C, à la suite de quoi la couche de fibres de verre-plastisol et l'étoffe tissée plate fusionnent ensemble et forment un ensemble;
- refroidir l'étoffe tissée plate (2) et la couche de fibres de verre-plastisol à une température inférieure à 60 °C, de préférence inférieure à 50 °C, plus préférablement inférieure à 40 °C, encore plus préférablement inférieure à 30 °C, de manière préférée entre toutes inférieure à 20 °C.

6. Procédé de fabrication d'un produit semi-fini selon la revendication 5, **caractérisé en ce que** le procédé comprend l'étape de calandrage de l'étoffe tissée plate (2) avec le support encore liquide (3) dans lequel la fibre de verre non tissée (4) est appliquée.

7. Matériau de revêtement de sol comprenant un produit semi-fini selon au moins l'une des revendications 1 à 4 et soit :
- un carreau de chlorure de polyvinyle (PVC) (5) en tant que sous-couche ayant une épaisseur de 2 mm minimum ; soit,
- une bande de revêtement de sol en chlorure de polyvinyle (PVC) (6) en tant que sous-couche ayant une épaisseur d'au moins 1 mm ; et/ou,
- un système de clic (7) dans la sous-couche.

8. Matériau de revêtement de sol selon la revendication 7, ayant une sous-couche de chlorure de polyvinyle (PVC) comprenant un plastifiant à faible migration sélectionné dans la liste constituée de phtalate de diisodécyle (DIDP), phtalate de diisononyle (DINP), téréphtalate de dioctyle (DOTP), dicarboxylate de diisononyle-1, 2-cyclohexane (DINCH) ou un ester d'un acide sulfonique alkyle et de phénol, dans lequel de préférence une couche supérieure (1) est présente dans le matériau de revêtement de sol comprenant une étoffe tissée.

9. Procédé de production d'un matériau de revêtement de sol selon la revendication 7 ou 8, comprenant les étapes suivantes :
- appliquer une couche de plastisol ou de colle sur la sous-couche ;
- appliquer le produit semi-fini sur la couche de plastisol ou de colle ;
- chauffer la sous-couche, le plastisol ou la colle et le produit semi-fini à une température supérieure à 150 °C.
- refroidir la sous-couche, le plastisol ou la colle et le produit semi-fini à une température inférieure à 60 °C, de préférence inférieure à 50 °C, plus préférablement inférieure à 40 °C, encore plus préférablement inférieure à 30 °C, de manière préférée entre toutes inférieure à 20 °C.

10. Procédé de production d'un fil composite, comprenant une fibre de verre filé de préférence plus épaisse que 5 microns, de préférence inférieure à 1000 microns et un revêtement de chlorure de polyvinyle (PVC), de préférence plus épais que 100 microns et de préférence plus mince que 2000 microns, comprenant les étapes suivantes :
- chauffer la fibre de verre filé à une première température ;
- faire passer la fibre de verre filé encore chaude à travers une résine de chlorure de polyvinyle (PVC) fondue à une seconde température ;
- laisser la résine fondue se solidifie autour de la fibre de verre filé dans un bain de refroidissement ;
dans lequel la première température est supérieure à la seconde température et la température du bain de refroidissement est inférieure à 30 °C.

11. Procédé de production d'un fil composite selon la revendication 11, **caractérisé en ce que** la période de temps pendant laquelle la fibre revêtue est située dans le bain de refroidissement a une durée inférieure à 2 secondes.

12. Fil composite fabriqué selon au moins l'une des revendications 11 ou 12, comprenant une fibre de verre filé plus épaisse que 5 microns, plus mince que 1000 microns et un revêtement de chlorure de polyvinyle (PVC) plus épais que 100 microns et plus mince que 2000 microns.

13. Combinaison, appropriée pour le collage de matériaux de revêtement de sol avec une sous-surface, de :
- un plastifiant à faible migration dans une sous-couche de chlorure de polyvinyle (PVC) du matériau de revêtement de sol choisi dans la liste constituée de phtalate de diisodécyle (DIDP), phtalate de diisononyle (DINP), téréphtalate de dioctyle (DOTP), dicarboxylate de diisononyle-1, 2-cyclohexane (DINCH) ou un ester d'un acide sulfonique alkyle et de phénol ; et
- un adhésif qui est une colle de polyacrylate à base d'eau remplie d'une résine synthétique.
